# EUROPEAN PATENT SPECIFICATION

(11) **EP 3 536 016 B1**
(45) Date of publication and mention of the grant of the patent: **08.04.2020**
(21) Application number: 17791189.8
(22) Date of filing: 19.10.2017
(51) Int. Cl.: H04W 28/02

(54) **UE, NETWORK NODE AND METHODS FOR HANDLING DATA PACKETS**
BENUTZERGERÄT, NETZWERKKNOTEN UND VERFAHREN ZUR HANDHABUNG VON DATENPAKETEN
UE, NOEUD DE RÉSEAU ET PROCÉDÉS DE TRAITEMENT DE PAQUETS DE DONNÉES

(30) Priority: 04.11.2016 US 201662417365 P
(43) Date of publication of application: 11.09.2019
(73) Proprietor: Telefonaktiebolaget LM Ericsson (PUBL), 164 83 Stockholm (SE)
(72) Inventor: WANG, Min, 977 53 Luleå (WF); SCHLIWA-BERTLING, Paul, 590 71 Ljungsbro (SE); ERIKSSON, Ann-Christine, 749 42 Enköping (SE); ENBUSKE, Henrik, 113 41 Stockholm (SE)
(74) Representative: Ericsson
(86) International application number: PCT/SE2017/051028
(87) International publication number: WO 2018/084767

(56) References cited:
- EP-A1- 1 865 744
- US-A1- 2016 309 516
- INTEL (EMAIL DISCUSSION CONVENOR): "Summary of email discussion on QoS framework", 3GPP DRAFT; S2-164759_NEXTGEN_EMAILDISC_QOS_SUMMARY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sanya; 20160829 - 20160902 23 August 2016 (2016-08-23), XP051143547, Retrieved from the Internet: URL:http://www.3gpp.org/ftp/tsg_sa/WG2_Arc h/TSGS2_116BIS_Sanya/Docs/ [retrieved on 2016-08-23]
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.1.0, 31 October 2016 (2016-10-31), pages 1-503, XP051173181, [retrieved on 2016-10-31]

## Description

### TECHNICAL FIELD

Embodiments herein relate to a UE and a network node and methods performed therein. In particular, embodiments herein relate to handling data packets.

### BACKGROUND

Communication devices such as User Equipments (UEs) are enabled to communicate wirelessly in a cellular communications network or wireless communication system, sometimes also referred to as a cellular radio system or cellular networks. The communication may be performed e.g. between two UEs, between a UE and a regular telephone and/or between a UE and a server via a Radio Access Network (RAN) and possibly one or more core networks, comprised within the cellular communications network.

UEs may further be referred to as wireless terminals, mobile terminals and/or mobile stations, mobile telephones, cellular telephones, laptops, tablet computers or surf plates with wireless capability, just to mention some further examples. The UEs in the present context may be, for example, portable, pocket-storable, hand-held, computer-comprised, or vehicle-mounted mobile devices, enabled to communicate voice and/or data, via the RAN, with another entity, such as another wireless terminal or a server.

The cellular communications network covers a geographical area which is divided into cell areas, wherein each cell area being served by a network node. A cell is the geographical area where radio coverage is provided by the network node.

The network node may further control several transmission points, e.g. having Radio Units (RRUs). A cell may thus comprise one or more network nodes each controlling one or more transmission/reception points. A transmission point, also referred to as a transmission/reception point, is an entity that transmits and/or receives radio signals. The entity has a position in space, e.g. an antenna. A network node is an entity that controls one or more transmission points. The network node may e.g. be a base station such as a Radio Base Station (RBS), eNB, eNodeB, NodeB, B node, or Base Transceiver Station (BTS), depending on the technology and terminology used. The base stations may be of different classes such as e.g. macro eNodeB, home eNodeB or pico base station, based on transmission power and thereby also cell size.

Further, each network node may support one or several communication technologies. The network nodes communicate over the air interface operating on radio frequencies with the UEs within range of the network node. In the context of this disclosure, the expression Downlink (DL) is used for the transmission path from the base station to the mobile station. The expression Uplink (UL) is used for the transmission path in the opposite direction i.e. from the UE to the base station.

In 3rd Generation Partnership Project (3GPP) Long Term Evolution (LTE), base stations, which may be referred to as eNodeBs or even eNBs, may be directly connected to one or more core networks. In LTE the cellular communication network is also referred to as Evolved Universal Terrestrial Radio Access Network (E-UTRAN).

In New Radio (NR) 3GPP discussions, Protocol Data Unit (PDU) sessions are established between a UE and the core network such as 5G Core (5GC). The UE may have multiple PDU sessions for which a user plane tunnel is established between the core network and the radio network. Each PDU session may include a number of PDU flows. Packets are grouped into "flows" according to filters, such as e.g. Traffic Flow Templates (TFTs) based on 5 tuples. The packet filters typically comprises IP 5-tuples, such as e.g. source IP address, destination IP address, source port, destination port and protocol type. Each flow is associated with a Flow ID. This Flow ID is expected to be included in the packet header, received on the user plane tunnel per PDU session from the core network to the radio access network, for NR via an NG3/NG-u interface. The NG3/NG-u is an interface between a NG-RAN node and a UPGW, also referred as to CN-UP node in next sections. The NG-U interface provides non-guaranteed delivery of user plane PDUs between the NG-RAN node and the UPGW.

The flows are then mapped to data radio bearers in the radio access network. The radio access network is responsible for the decision of mapping flows to data radio bearers, and multiple flows may be mapped to the same data radio bearer. Also, flows from different PDU sessions may be mapped to the same data radio bearer.

Which flows that belong to which data radio bearer will have to be indicated to the UE. This indication may be done using control signaling to the UE, and by marking each user data packet with a flow id and possibly a PDU session id or a user data tunnel id by the radio access network in the downlink transmission. In the same way the UE will have to mark the user data packets in the uplink transmission such that the radio access network may map the packets to the correct flow and PDU session towards the core network. Depending on the uniqueness of the PDU session id and the flow id, the value range of the identities may vary.

A reflective Quality of Service (QoS) function is also discussed and is supposed to be applied for the UE to map the UL packets to the corresponding flows. Using this function, the UE may learn and/or detect the mapping rule between DL packets and the DL flow, and may create filters, such as e.g. TFTs, for UL which enables a mapping of UL packets to the same flow in UL direction. Thus, there is no explicit Non-Access Stratum (NAS) signaling to the UE required for the configuration of NAS UL filters. The 3GPP document "Summary of email discussions on QoS framework", S2-164759, SAWG2 Meeting#116-BIS, 29 Aug- 2 Sep 2016, relates to reflective QoS over RAN (radioaccess network) under the control of the network, where a specific proposal is based on the features that the CN (core network) is responsible to provide a classification (including PDU 5 Flow ID and possibly also PDU session ID) of the flow, and the AN (access network) is responsible for the realizing packet forwarding treatment.

### SUMMARY

It is an object of embodiments herein to improve the handling of packet flows in a radio communications network.

According to a first aspect of embodiments herein, the object is achieved by a method, performed by a RAN node as set out by claim 1.

According to a third aspect of embodiments herein, the object is achieved by a Radio Access Network, RAN, node as set out by claim 11.

According to a third aspect of embodiments herein, the object is achieved by a User Equipment, UE, for handling data packets from a Core Network, CN, node to the as set out by claim 14.

By determining a RAN flow ID for data packets and/or flows transmitted in the RAN, the overhead of the signaling in the RAN is reduced, which increases the capacity and performance in the communications network.

### BRIEF DESCRIPTION OF THE DRAWINGS

- Figure 1: is a schematic block diagram illustrating an architecture of a Next generation core and radio access network,
- Figure 2: is a flow chart depicting data packet flows in a communications network,
- Figure 3: is a schematic block diagram illustrating a method for generating a RAN flow ID according to one embodiment herein,
- Figure 4: is a schematic block diagram illustrating a method for generating a RAN flow ID according to one embodiment herein,
- Figure 5: is a sequence diagram depicting an embodiment of handling data packets according to one embodiment herein,
- Figure 6: is a flowchart depicting embodiments of a method in a RAN node,
- Figure 7: is a schematic block diagram illustrating a RAN node according to embodiments herein,
- Figure 8: is a flowchart depicting embodiments of a method in a UE,
- Figure 9: is a flowchart schematic block diagram illustrating a UE according to embodiments herein.

### DETAILED DESCRIPTION

The following common terminologies are used in the embodiments and are elaborated below:
Radio Access Network (RAN) node: In some embodiments the non-limiting term radio network node is more commonly used and it refers to any type of network node serving UE and/or connected to other network node or network element or any radio node from where UE receives signal. Examples of radio network nodes are Node B, base station (BS), multi-standard radio (MSR) radio node such as MSR BS, eNode B, eNB, 5G radio node, such as e.g. a gNG, network controller, radio network controller (RNC), base station controller, relay, donor node controlling relay, base transceiver station (BTS), access point (AP), transmission points, transmission nodes, RRU, RRH, nodes in distributed antenna system (DAS) etc.
Network node: In some embodiments a more general term "network node" is used and it can correspond to any type of radio network node or any network node, which communicates with at least a radio network node. Examples of network node are any radio network node stated above, core network node (such as e.g. MSC, MME, or a Next Generation Core Network, NGCN, with Core Network Control Plane (CN_CP) and Core Network User Plane (CN_UP) as network nodes, etc.), O&M, OSS, SON, positioning node (e.g. E-SMLC), MDT etc.
User equipment: In some embodiments the non-limiting term user equipment (UE) is used and it refers to any type of wireless device communicating with a radio network node in a cellular or mobile communication system. Examples of UE are target device, device to device UE, machine type UE or UE capable of machine to machine communication, PDA, iPAD, Tablet, mobile terminals, smart phone, laptop embedded equipped (LEE), laptop mounted equipment (LME), USB dongles etc.

As part of developing embodiments herein a problem will first be identified and discussed.
In order for the UE and/or the RAN node to be able to identify which data packet that is related to a specific PDN session, a flow ID needs to be included in the user data packet header, such as e.g. in a Packet Data Convergence Protocol (PDCP) packet header, transmitted between the RAN node and the UE in downlink and uplink.

Additionally, if flows belonging to different PDU sessions are mapped to the same Data Radio Bearer (DRB), it may further be required that a PDU session ID is included in the packet header, such as e.g. in the packet header. The number of bits required for these identities may be very large due to the requirement that each PDU session must be uniquely identified, and the addition of these IDs in PDCP header gives a risk of increased header overhead. A large overhead is especially an issue for small user data packets, such as voice packets, control packets, etc.

It is therefore an object of the embodiments herein to provide a method which effectively conveys a Flow ID and/or a session ID in the packet header within RAN while limiting the packet overhead.

The separate/additional header fields may also be used for security reasons, as input for the encryption of the data, in order to protect the data from being illegally accessed. Thereby, a higher computational complexity and higher processing time for data encryption may be required when adding bits to the header in form of long identities. It may therefore be beneficial to add fewer changes to the packet header, such as e.g. in the PDCP, in RAN.

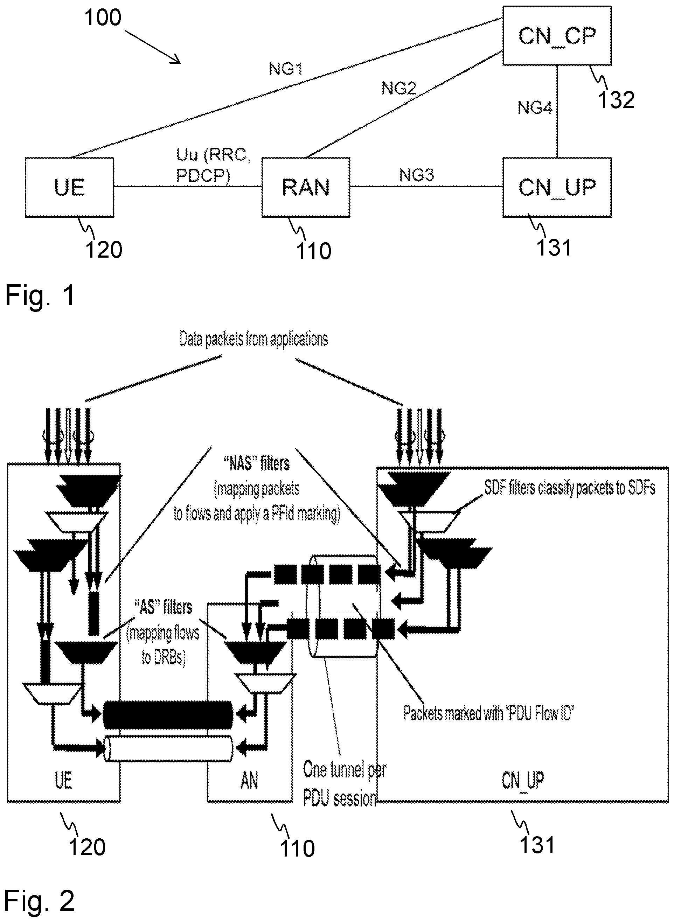

**Figure 1** discloses an architecture of a **Next Generation Communications Network 100**, which may also be referred to as a 5G network, in which embodiments herein may be implemented. The communications network 100 comprises a core network (CN), which may be referred to as a Next Generation Core Network (NGCN), and a Radio Access Network (RAN), which may also be referred to as New Radio (NR). The communications network 100 comprises a User Equipment **(UE) 120**, a **RAN node 110**, and a core network functionality. In the NGCN the core network functionality may be distributed over two nodes such as core network nodes, a CN User Plane (**CN_UP**) **131** and a CN Control Plane (**CN_CP**) **132.** The control plane information may be communicated between the CN_CP 132 and the UE 120 over an interface which herein is referred to as **NG1**, between the CN_CP 132 and the RAN node 110 via an interface herein referred to as **NG2** and between the CN_CP 132 and the CN_UP 131 via an interface herein referred to as **NG4.** The user plane communication may be performed over an interface referred to as **NG3** between the CN_UP 131 and the RAN node 110 and via a **Uu** interface between the RAN node 110 and the UE 120.

**Figure 2** shows the changes expected for the next generation CN according to discussions in 3GPP. Instead of mapping IP packets to Evolved Packet System (EPS) bearers, the Next Generation core network is supposed to group packets into flows. This may be done by packet filters similar to the TFTs defined in EPS, i.e. the next generation CN and the UE 120 may ensure that all packets to and from, for example, the same IP/Port number tuple belong to a "flow". On their way through the transport network each packet may be marked with some sort of "Flow ID" in order to be identified. In Figure 2 these filters are denoted as "NAS filters".

As in E-UTRA/EPC, the core network determines and applies downlink filters locally and may configure the UE by means of NAS signalling with a set of uplink NAS filters. This may also be referred to as pre-authorised QoS.

The flow of packets between the CN_UP 132 and the RAN node 110, which RAN node 110 may also be referred to as an Access Node (AN), may be referred to as a PDU flow or a PDU flow. The flow of packets mapped to a Data Radio Bearer (DRB) for communication in the RAN, i.e. between the AN and the UE 120, may be referred to as a RAN flow.

Besides these explicitly configured uplink TFTs, a reflective QoS function may also be implemented. As a basic principle, the UE 120 detects which DL packets appear in which DL flow and creates TFTs, which may also be referred to as filters, that identify corresponding uplink packets and map those to the same flow in UL direction. Hence no explicit NAS signaling to the UE 120 is needed for configuring the NAS filters. This has a large potential to decrease the control signaling for services where the filter criteria are subject to frequent changes. Explicitly adding and removing filters on port numbers and IP addresses could be avoided by such a mechanism, which would decrease the signaling in the network.

Similarly to the Packet Data Network (PDN) Connections in EPS the NextGen CN will support multiple PDU sessions. Each PDU session may be mapped to a separate transport network bearer in order to separate them, even if the contained packets have an overlapping IP address range. The UE 120 must further be able to determine which IP packet belongs to which PDN session in order to route packets correctly. This may also need to be taken into account in the reflective QoS filtering.

As explained above the mapping from service data flows to "flows" may be performed in the CN and in the UE's NAS layer. Hence, as shown in Figure 2, the RAN and the UE's AS layer remain agnostic to Internet Protocol (IP)/ Transmission Control Protocol (TCP) /User Datagram Protocol (UDP) port numbers and service data flows. The RAN node 110 may determine the mapping relationship between QoS flow, as determined by the UE 120 in UpLink (UL) or marked by the CN in DownLink (DL), and DRB for UL and DL.

The UE 120 may apply the obtained mapping information, such as the mapping between certain flows and certain DRBs and the mapping between IP packets and flow, to perform reflective QoS function for a related radio bearer. In other words, the UE 120 may detect the mapping rule between DL packets and the DL flow, and create TFTs (filters) for UL that may map UL packets to the same flow in UL direction. The UE 120 may further monitor the flow ID(s) of the DL packets and apply the same mapping in the UL. E.g., for a radio bearer, the UE 120 may map the UL packets belonging to the flows(s) corresponding to the flow ID(s) and PDU Session observed in the DL packets for that radio bearer.

The mapping between certain flows and certain DRBs may be the AS level reflective mapping.

The mapping between IP packets and flows may be the NAS level reflective mapping.

Embodiments herein comprise a number of exemplary embodiments for handling the PDU session and flow ID's between the RAN node 110, such as an eNB, and the UE 120 in a Next Generation Core and NR scenario.
Exemplary embodiment A: RAN flow ID containing both PDU session identity and PDU flow ID. The RAN flow ID is defined to contain both PDU session ID, and PDU flow ID.
Exemplary embodiment B: Paring function. To shorten the length of the RAN flow ID, a paring function (e.g., Cantor paring function) can be used to uniquely encode a PDU session ID and a PDU flow ID into a single RAN flow ID.
Exemplary embodiment C: mapping between RAN IDs (PDU session ID or flow ID) and the PDU IDs (PDU session ID or flow ID) to a local RAN ID.
Exemplary embodiment D: The marking of a data packet with an ID on the Uu is made optional, when 1-to-1 mapping between PDU flow to DRB.
Exemplary embodiment E: the inclusion and mapping of IDs (as in Exemplary embodiment A-D) is made at DRB setup and only at the first packet in a PDU session/flow sent on a DRB.

The exemplary embodiments are described in more detail in the following.

There are several alternatives to convey a PDU session ID and a flow ID in the RAN. For example, these IDs may be carried in the PDCP header to the RAN node, such as e.g. a gNB, upon the reception of each IP packet from NG-u interface in NR. The UE 120 receives PDCP packets, and therefore applies the same mapping rule to map UL flows to DRB. The mapping rule may either be provided via control signaling, RRC, from the RAN to the UE 120.

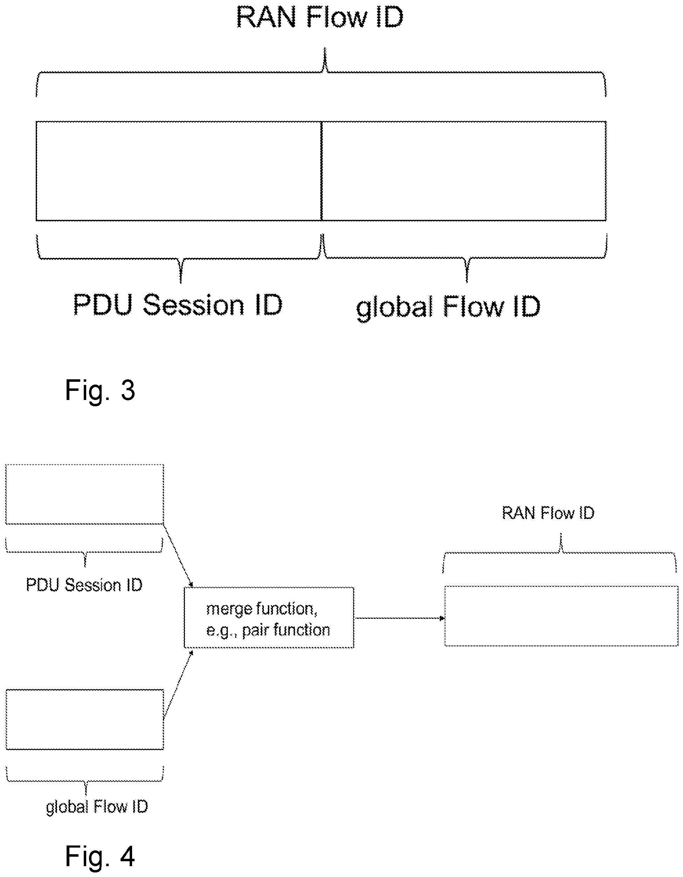

**Example Embodiment A:** A RAN flow ID comprising both a PDU session identity (ID) and a PDU flow ID. The RAN flow ID may be defined to comprise both PDU session ID and PDU flow ID. One example on how to merge a PDU session ID and a PDU flow ID into a RAN flow ID is shown in **Figure 3**, wherein both IDs are concatenated to make a corresponding RAN flow IDThe PDU session ID may be put on the most significant bits, and the PDU flow ID may be put on the least significant bits. The Most Significant Bit (MSB) is the bit position in a binary number having the greatest value. The MSB is sometimes also referred to as the left-most bit. According to another example the PDU session ID may be put on the least significant bits, while the PDU flow ID is put on the most significant bits. Thereby the length of the RAN flow ID would be equal to the sum of the lengths of the PDU session ID and the PDU flow ID. Thus, this may lead to the additional packet header overhead for NG-U interface (NR) or S1 interface (LTE) compared to the case where there is no RAN flow ID is attached in the header and the case where a shorter length of the RAN flow ID is attached in the header.

An alternative embodiment A may comprise a RAN flow ID comprising any one out of a PDU session ID and a PDU flow ID. In one example, it is only A PDU session ID that is comprised in a RAN flow ID. In another example, a RAN flow ID comprises only a PDU flow ID. Sometimes, it is sufficient for the RAN or UE to identify a flow just base on any one out of a PDU session ID and a PDU flow ID, since another one is already known.

### Example Embodiment B: Paring function

In order to reduce the length of the RAN flow ID, a paring function, such as e.g. a Cantor paring function, may be used to uniquely encode a PDU session ID and a PDU flow ID into a single RAN flow ID as disclosed in **Figure 4****.** This encoded RAN flow ID may be shorter than the original length of the PDU session ID and the PDU flow ID combined. Thereby, this RAN flow ID may require fewer bits than its original PDU session ID plus its PDU flow ID. At the receiver side the encoded RAN flow ID may be decoded using the same paring function. This may incur the additional computational complexity due to inverting from the RAN flow ID into the PDU session ID and the PDU flow ID at the receiver side.

### Example Embodiment C: Mapping between RAN IDs (PDU session ID or flow ID) and the PDU IDs (PDU session ID or flow ID) to a local RAN ID.

In order to reduce the header overhead, as mentioned in example embodiment B, one option is to introduce local RAN IDs derived from the combination of PDU session ID and flow ID, which are only valid within the RAN - UE on access stratum. The mapping relation between the local RAN IDs and the PDU IDs may be signaled by the RAN, via the RAN node 110, to the UE 120, via RRC signaling. Based on the mapping relation, the RAN node 110 includes the local IDs in the packet header, for example, PDCP header, before sending the packet to the UEs such as the UE 120.

The local IDs potentially have smaller sizes, compared to the size of the PDU IDs. Therefore, it may be beneficial to use a local ID in order to reduce the header overhead.

An example of Example Embodiment C is shown in **Table 1.** It can be seen that the local RAN ID such as e.g. "**1**" has a shorter length than that of the PDU IDs such as e.g. "**1110**" and "**001**", therefore, the packet header overhead is lower with Example Embodiment C.

The mapping relation between the local RAN IDs and the PDU IDs, such as the PDU flow ID and the PDU session ID, may be comprised in a look-up table. The look-up table may be compiled by the RAN node upon configuration of the communication and/or the network.

**Table 1. An example of Alternative 3 such as Example Embodiment C**

| UE Id | PDU session Id | PDU flow Id | Local RAN id |
|---|---|---|---|
| UE A | 1110 | 001 | 1 |
| | | 022 | 2 |
| | 1111 | 001 | 3 |
| | | 003 | 4 |
| UE B | 1110 | 003 | 1 |
| | | 022 | 2 |
| | 1111 | 022 | 3 |
| | | 030 | 4 |

**Example Embodiment D**: In some embodiments the marking of a data packet with an ID when sent over the Uu interface between the UE 120 and the RAN node 110, may be made optional.

The RAN node 110 may, when it is critical to save overhead, decide to do a 1-to-1 mapping between PDU flow and DRB to minimize the header size when needed, e.g. for a service where the packet size is critical for good service performance. For the 1-to-1 mapping refers to a mapping of one single flow to a DRB. When there is no multiplexing of flows on the same DRB, there is no need to mark the data packet from the RAN such as the RAN node 110 or from the UE 120 on the Uu with an identity. The RAN such as the RAN node 110 informs the UE 120 of which combination of PDU session ID and PDU flow ID that will be mapped to the DRB e.g. via RRC signaling. Thus, the PDU flow ID and PDU session ID does not need to be included in the packet header on Uu, since there will be only data packets of this combination carried on the DRB. This alternative does not add any information to the packet header and thus the size of the packet header and the packet is not increased. This embodiment is only relevant in a scenario where only one PDU flow is sent on a bearer.

**Example Embodiment E**: In this embodiment the UE 120 and/or the RAN such as the RAN node 110 determines the IDs to flow and DRB and vice versa based on the first packet or packets sent over a DRB. According to this alternative, the larger header overhead incurred is only present at the beginning of e.g. a flow sent on a DRB and/or at DRB setup. The UE 120 and the RAN such as the RAN node 110 maintain the same DRB to flow mapping for the duration of the packet flow. Hence, when the UE 120 receives a flow from the RAN node 110, the IDs for this flow and for the DRB are sent in the header of the first packet. The following packets in the flow are all related to the same flow as the first packet. As long as no new ID is received in the header of a packet, all received packets belong to the previously received ID.

In another embodiment of example embodiment C, the mapping of a flow to the DRB for where the UE 120 may have a configuration stored, the local RAN ID to flow mapping may be conveyed as a MAC Control Element (MAC CE).

In an embodiment for example embodiments A-E, the CN such as the CN node 132 indicates in a configuration or the CN node 131 indicates in a header or by the presence of IDs and/or headers, if a CN filter applies. As a result, the RAN such as the RAN node 110 may use fewer header information bits and or headers for example only conveying a single flow to DRB mapping or similar.

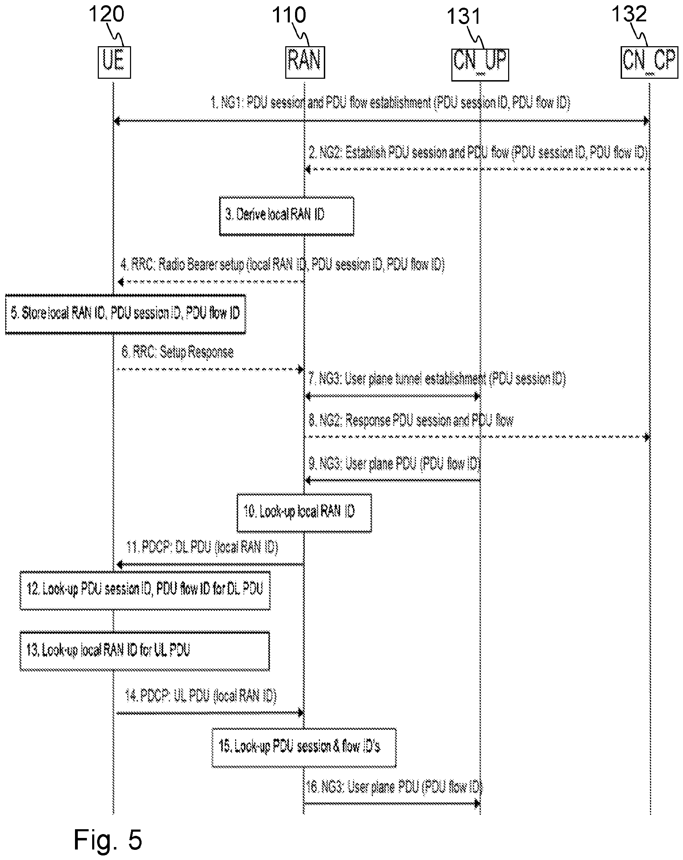

**Figure 5** shows a sequence diagram of handling data packets according to Example embodiment C described above.
**Action 1.** A PDU session and a PDU flow may be established between the CN_CP 132 such as the core network node 132_and the UE 120. The PDU session may include only one default PDU flow, or it may include multiple PDU flows. For simplicity, one PDU flow is shown in the sequence. If multiple PDU flows are included, a local RAN ID may be derived for each PDU flow ID.
**Action 2.** The CN_CP 132 sends to the RAN node 110 a request to establish a PDU session and a PDU flow. PDU session ID and PDU flow ID is included.
**Action 3.** The RAN node 110 may derive a local RAN ID from the PDU session ID and the PDU flow ID, as disclosed in Table 1. If multiple PDU flows are included in the PDU session, the RAN may derive a local RAN ID for each PDU flow ID.
**Action 4.** The RAN 110 may set up a radio bearer towards the UE 120 and include the local RAN ID and what PDU session ID and PDU flow ID it represents.
   If multiple PDU flows are mapped to the DRB, each local RAN ID and the corresponding PDU session ID and PDU flow ID may be included.
**Action 5.** The UE 120 may store the local RAN ID (ID's) and what PDU session ID and PDU flow ID it (they) represents.
**Action 6.** The UE 120 may respond to the RAN node 110 on the radio bearer setup. This is to indicate the complement of the RRC connection establishment at the UE side, and meanwhile the UE 120 may further provide more information such as the UE capability information and the information required to establish the UP tunnel, to the network.
**Action 7.** A user plane tunnel may be established for the PDU session. The user plane tunnel may carry the PDU flow.
**Action 8.** The RAN 110 may respond on the PDU session and PDU flow establishment to the CN_CP 132.
**Action 9.** A DL data packet (PDU), marked with a PDU flow ID, arrives to the RAN node 110 from CN_UP 131 on the established user plane tunnel for the PDU session.
**Action 10.** The RAN node 110 makes a look-up of the combination of PDU session ID and PDU flow ID and finds the corresponding local RAN ID which was derived in Action 2.
**Action 11.** The RAN node 110 marks the DL data packet with the local RAN ID, e.g. in the PDCP header, and sends the data packet to the UE 120.
**Action 12.** The UE 120 makes a look-up of the local RAN ID and finds the PDU session ID and PDU flow ID for the data packet.
**Action 13.** The UE 120 has an UL data packet to send and makes a look-up of the PDU session ID and PDU flow ID and finds the local RAN ID.
**Action 14.** The UE 120 marks the UL data packet with the local RAN ID and sends the data packet to the RAN 110.
**Action 15.** The RAN 110 makes a look-up of the local RAN ID and finds the PDU session ID and PDU flow ID for the UL data packet.
**Action 16.** The RAN 110 marks the UL data packet with PDU flow ID and sends to the CN node 131, 132 the data packet in the user plane tunnel corresponding to the correct PDU session.

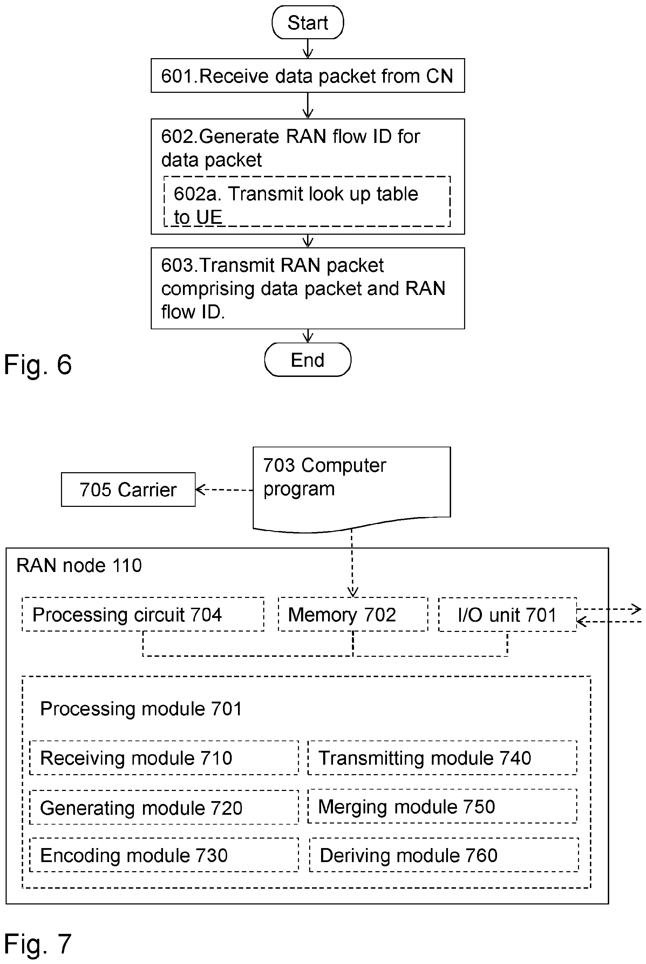

Example of embodiments of a method performed by the RAN node 110, for handling data packets from a Core Network (CN) node (131, 132) to a User Equipment (UE) will now be described with reference to a flowchart depicted in **Figure 6****.**

The method comprises the following actions, which actions may be taken in any suitable order. Dashed lines of a box in Figure 6 indicate that this action is performed in only some embodiments and is not mandatory.

### Action 601

The RAN node 110 receives, from the CN node 131, 132, a data packet comprised in a PDU flow. The data packet comprises a PDU session ID and a PDU flow ID for identifying the data packet.

### Action 602

The RAN node 110 generates a RAN flow ID based on the PDU session ID and the PDU flow ID.

According to one embodiment herein, the generating may comprise merging the PDU session ID and the PDU flow ID to create the RAN flow ID. The PDU session ID may be placed on the most significant bits and the PDU flow ID may be placed on the least significant bits of the RAN flow ID. The merging may comprise concatenating the PDU session ID and the PDU flow ID. This embodiment corresponds to example embodiment A.

According to one embodiment herein, the generating may comprise encoding the PDU session ID and the PDU flow ID into the RAN flow ID by means of a paring function. The generated RAN flow ID may comprise less bits than the PDU session ID and the PDU flow ID combined. In one embodiment the paring function may be a Cantor paring function. This embodiment corresponds to example embodiment B.

According to one embodiment herein, the generating comprises deriving a local RAN flow ID for a combination of PDU session ID and PDU flow ID from a look-up table comprising a mapping of the local RAN flow IDs to combinations of PDU session IDs and PDU flow IDs. The local RAN flow ID may only be valid between the RAN node and the UE. The generating may further comprise transmitting **602a** the look-up table comprising the mapping to the UE. This embodiment corresponds to example embodiment C.

### Action 603

The RAN node 110 then transmits a RAN packet to the UE 120, wherein the RAN packet comprises the data packet and the generated RAN flow ID for identifying the RAN packet.

In one embodiment herein, when the RAN flow comprises a plurality of packets having the same RAN flow ID, the transmitting may comprise transmitting the RAN flow ID in the first RAN packet of the plurality of RAN packets in the RAN flow. This embodiment corresponds to example embodiment E.

In some embodiments the transmitting of the RAN packet comprising the data packet and the generated RAN flow ID for identifying the RAN packet, is related to a radio protocol layer.

The transmitting of the RAN packet comprising the data packet and the generated RAN flow ID for identifying the RAN packet, may be performed when a reflective QoS function is enabled for the radio bearer where the RAN packet is transmitted on.

The RAN packet comprising the data packet and the generated RAN flow ID may be managed by a radio protocol layer.

In some embodiments a reflective QoS function is enabled, said reflective QoS function indicating, to the UE 120, a mapping rule for mapping packets in the uplink direction to a flow and a Data Radio Bearer.

A mapping rule for mapping packets in the uplink direction to a flow and a Data Radio Bearer may be provided to the UE 120 via RRC control signaling.

The mapping rules may e.g. be indicated in RRC signaling or reflect QoS. In the latter case, the UE 120 may learn on how IP packets are mapped to the flow, by checking the IP address information, and the flow ID carried by the PDU packets.

The UE 120 may learn how the flows are mapped to the DRBs, by checking the RAN flow ID and the DRB that carries these packets.

To perform the method actions for for handling data packets from the Core Network (CN) node 131, 132 to a User Equipment (UE) 120 described above in relation to Figure 6, the RAN node 110 may comprise the following arrangement depicted as a block diagram in **Figure 7****.**

The RAN node 110 may comprise a **processing module 701**, such as a means for performing the methods described herein. The means may be embodied in the form of one or more hardware modules and/or one or more software modules

The RAN node 110 may further comprise a **memory 702.** The memory may comprise, such as contain or store, instructions, e.g. in the form of a **computer program** 703, which may comprise computer readable code units.

According to some embodiments herein, the RAN node 110 and/or the processing module 701 comprises a **processing circuit 704** as an exemplifying hardware module. Accordingly, the processing module 701 may be embodied in the form of, or 'realized by', the processing circuit 704. The instructions may be executable by the processing circuit 704, whereby the RAN node 110 is operative to perform the actions of Figure 6. As another example, the instructions, when executed by the RAN node 110 and/or the processing circuit 704, may cause the RAN node 110 to perform the actions according to Figure 6.

In view of the above, in one example, there is provided a node 110 for performing a method for handling data packets from the Core Network (CN) node 131, 132 to a User Equipment (UE). Again, the memory 702 may contain the instructions executable by said processing circuit 704 whereby the RAN node 110 is operative for:
- receiving, from the CN node 131, 132, a data packet comprised in a PDU flow, which data packet comprises a PDU session ID and a PDU flow ID for identifying the data packet,
- generating a RAN flow ID based on the PDU session ID and the PDU flow ID,
transmitting a RAN packet to the UE 120, wherein the RAN packet comprises the data packet and the generated RAN flow ID for identifying the RAN packet.

Figure 7 further illustrates a **carrier 705**, or program carrier, which comprises the computer program 703 as described directly above.

In some embodiments, the processing module 701 comprises **an Input/Output unit 706**, which may be exemplified by a receiving module and/or a sending module as described below when applicable.

In further embodiments, the RAN node 110 and/or the processing module 701 may comprise one or more of **a receiving module 710, a generating module 720, an encoding module 730, a transmitting module 740, and a merging module 750** as exemplifying hardware modules. In other examples, one or more of the aforementioned exemplifying hardware modules may be implemented as one or more software modules.

Therefore, according to the various embodiments described above, the RAN node 110 and/or the processing module 701 and/or the receiving module 710 may be configured for receiving, from the CN node, a data packet comprised in a PDU flow, which packet comprises a PDU session ID and a PDU flow ID for identifying the packet.

The RAN node 110 and/or the processing module 701 and/or the generating module 720 may be configured for generating a RAN flow ID based on the PDU session ID and the PDU flow ID.

The RAN node 110 and/or the processing module 701 and/or the transmitting module 740 may be configured for transmitting a RAN packet to the UE, wherein the RAN packet comprises the data packet and the generated RAN flow ID for identifying the RAN packet.

The RAN node 110 and/or the processing module 701 and/or the generating module 720 and/or the merging module 750 may be configured for the generating the RAN flow ID by merging the PDU session ID and the PDU flow ID to create the RAN flow ID.

The RAN node 110 and/or the processing module 701 and/or the generating module 720 and/or the encoding module 730 may be configured for generating the RAN flow ID by encoding the PDU session ID and the PDU flow ID into the RAN flow ID by means of a paring function. In one embodiment the paring function may be a Cantor paring function.

The RAN node 110 and/or the processing module 701 and/or the generating module 720 and/or the deriving module 760 may be configured for generating the RAN flow ID by deriving a local RAN flow ID for a combination of PDU session ID and PDU flow ID from a look-up table comprising a mapping of the local RAN flow IDs to combinations of PDU session IDs and PDU flow IDs.

The RAN node 110 and/or the processing module 701 and/or the transmitting module 740 may be configured for transmitting the look-up table comprising the mapping to the UE.

The RAN node 110, and/or the processing module 701 and/or the transmitting module 740 may further be configured to transmit the RAN packet comprising the data packet and the generated RAN flow ID for identifying the RAN packet being related to a radio protocol layer.

The RAN node 110, and/or the processing module 701 and/or the transmitting module 740 may further be configured to transmit the RAN packet comprising the data packet and the generated RAN flow ID for identifying the RAN packet, when a reflective Quality of Service, QoS, function is enabled for the radio bearer where the RAN packet is transmitted on.

The RAN packet comprising the data packet and the generated RAN flow ID may be adapted to be managed by a radio protocol layer.

The RAN node 110 and/or the processing module 701 may further be configured to enable a reflective QoS function, said reflective QoS function indicating, to the UE 120, a mapping rule for mapping packets in the uplink direction to a flow and a Data Radio Bearer

The RAN node 110 and/or the processing module 701 may further be configured to provide to the UE 120 via RRC control signalling, a mapping rule for mapping packets in the uplink direction to a flow and a Data Radio Bearer.

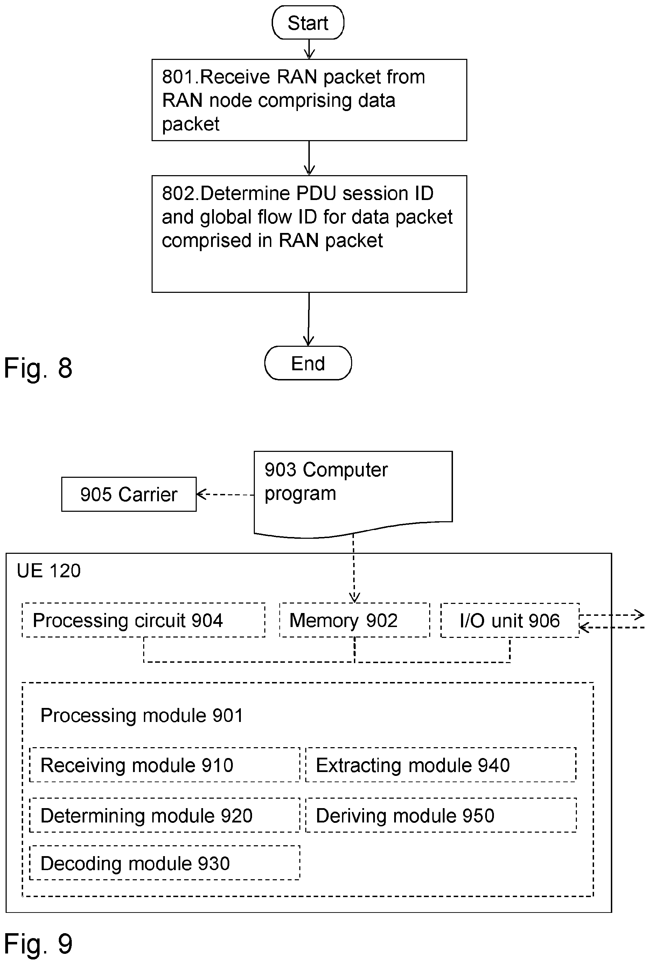

Example of embodiments of a method performed by a UE 120, for handling data packets from a Core Network (CN) node to the UE 120 will now be described with reference to a flowchart depicted in **Figure 8****.** The data packets may be transmitted between the CN node and the UE via the RAN node.

It should be noted that PDU sessions are established between the UE 120 and the core network. The UE 120 may have multiple PDU sessions for which a user plane tunnel is established between the core network and the radio network. Each PDU sessions may include a number of PDU flows. The flows are mapped to DRB in the radio access network. The RAN is responsible for the decision of mapping "flows" to DRB. Flows from different PDU sessions may be mapped to the same data radio bearer.

Relating to the QoS, please consider the following example:
- For each UE such as the UE 120, the 5GC establishes one or more PDU Sessions.
- For each UE such as the UE 120, the NG-RAN establishes one or more DRB per PDU Session. The NG-RAN maps packets belonging to different PDU sessions to different DRBs. Hence, the NG-RAN establishes at least one default DRB for each PDU Session indicated by 5GC upon PDU Session establishment.

According to some embodiments, RAN2 may design a 1 byte Service Data Adaptation Protocol (SDAP) header. Whether the QFI is 6 bit or 7 bits is FFS. If configured, the SDAP header size for a DRB may be static (assuming 1 byte header). The QFI will always be present. No SN will be introduced in SDAP.

The method comprises the following actions, which actions may be taken in any suitable order. Dashed lines of a box in Figure 8 indicate that this action is performed in only some embodiments and is not mandatory.

### Action 801

The UE 120 receives, from a RAN node 110, a RAN packet comprised in a RAN flow. The RAN packet may comprise a data packet and a RAN flow ID for identifying the RAN packet.

The RAN packet comprising the data packet and the generated RAN flow ID may be managed by a radio protocol layer.

It should be noted that the RAN node 110 may generate a RAN flow ID based on the PDU session ID and the PDU flow ID.

Relating to the QoS, please consider the following example:
- For each UE such as the UE 120, the NG-RAN establishes one or more DRB per PDU Session. The NG-RAN, such as the RAN node 110, maps packets belonging to different PDU sessions to different DRBs. Hence, the NG-RAN establishes at least one DRB per PDU Session.

### Action 802

The UE 120 determines a PDU session ID and a PDU flow ID of the data packet comprised in the RAN packet based on the received RAN flow ID.

According to one embodiment herein, the determining comprises extracting the PDU session ID and the PDU flow ID from the RAN flow ID, wherein the PDU session ID is placed on the most significant bits and the PDU flow ID is placed on the least significant bits of the RAN flow ID. This embodiment corresponds to example embodiment A.

According to one embodiment herein, wherein the determining comprises decoding the PDU session ID and the PDU flow ID from the RAN flow ID by means of a paring function.The paring function may be a Cantor paring function. This embodiment corresponds to example embodiment B.

According to one embodiment herein, the determining comprises deriving the PDU session ID and the PDU flow ID corresponding to a local RAN flow ID from a look-up table comprising a mapping of the local RAN flow IDs to combinations of PDU session ID and PDU flow ID. According to this embodiment, the UE 120 may further receiving the look-up table comprising the mapping from the RAN node. This embodiment corresponds to example embodiment C.

According to a further embodiment, when the RAN flow comprises a plurality of RAN packets having the same RAN flow ID and a RAN flow ID is only comprised in a first packet of the RAN flow, the determining may further comprise determining the PDU session ID and a PDU flow ID based on the RAN flow ID in the first RAN packet and applying the determined PDU session ID and a PDU flow ID to the following RAN packets of the plurality of RAN packets in the RAN flow. This embodiment corresponds to example embodiment E.

It should be noted that in some embodiments, the PDU flow ID corresponds to QoS Flow ID. Further, the expressions NG-RAN and the RAN node 110 may be used interchangeable in this document.

Relating to the QoS, please consider the following example:
- For each UE, such as the UE 120, the NG-RAN such as the RAN node 110, establishes one or more DRB per PDU Session. The NG-NG-RAN maps packets belonging to different PDU sessions to different DRBs. Hence, the NG-RAN establishes at least one default DRB for each PDU Session indicated by 5GC upon PDU Session establishment.

In some embodiments, NG-RAN and 5GC ensure quality of service, e.g. reliability and target delay, by mapping packets to appropriate QoS Flows and DRBs. Hence there may be a 2-step mapping of IP-flows to QoS flows, NAS, and from QoS flows to DRBs , Access Stratum.

In NG-RAN, the data radio bearer (DRB) may define the packet treatment on the radio interface (Uu). A DRB may serve packets with the same packet forwarding treatment. Separate DRBs may be established for QoS flows requiring different packet forwarding treatment. In the downlink, the NG-RAN may map QoS Flows to DRBs based on NG-U marking (QoS Flow ID) and the associated QoS profiles. In the uplink, the UE 120 marks uplink packets over Uu with the QoS flow ID for the purposes of marking forwarded packets to the CN.

In the uplink, the NG-RAN may control the mapping of QoS Flows to DRB in two different ways:
- Reflective mapping: for each DRB, the UE 120 may monitor the QoS flow ID(s) of the downlink packets and applies the same mapping in the uplink; that is, for a DRB, the UE maps the uplink packets belonging to the QoS flows(s) corresponding to the QoS flow ID(s) and PDU Session observed in the downlink packets for that DRB. To enable this reflective mapping, the NG-RAN marks downlink packets over Uu with QoS flow ID.
- Explicit Configuration: besides the reflective mapping, the NG-RAN may configure by RRC an uplink "QoS Flow to DRB mapping".

If an incoming UL packet matches neither an RRC configured nor a reflective "QoS Flow ID to DRB mapping", the UE 120 may map that packet to the default DRB of the PDU session.

Within each PDU session, it may be up to NG-RAN how to map multiple QoS flows to a DRB. The NG-RAN may map a Guaranteed Bit Rate (GBR) flow and a non-GBR flow, or more than one GBR flow to the same DRB, but mechanisms to optimise these cases are not within the scope of standardization. The timing of establishing non-default DRB(s) between NG-RAN and UE for QoS flow configured during establishing a PDU session can be different from the time when the PDU session is established. It is up to NG-RAN when non-default DRBs are established.

In DC, the QoS flows belonging to the same PDU session may be be mapped to different bearer types and as a result there can be two different SDAP entities configured for the same PDU session: one for Master Cell Group (MCG) and another one for Second Cell Group (SCG), for instance when one MCG bearer and one SCG bearer are used for two different QoS flows.

The information about the mapping may used to perform reflective QoS function for a related radio bearer.

In some embodiments, the UE 120 applies the mapping rule to map packets in the uplink direction to a flow and a Data Radio Bearer towards the core network according to a mapping rule.

This may comprise a case where reflective QoS function is enabled and when the UE 120 receives the mapping rule via RRC signalling.

Thus in some embodiments a reflective QoS function is enabled, whereby the UE 120 detects a mapping rule via reflective QoS for mapping packets in uplink direction to a flow and a Data Radio Bearer towards the core network.

In some embodiments the UE 120 receives a mapping rule for mapping packets in uplink direction to a flow and a Data Radio Bearer towards the core network via control signaling, RRC, from the RAN node 110.

To perform the method actions for handling data packets from a Core Network (CN) node to a User Equipment (UE) described above in relation to Figure 8, the UE 120 may comprise the following arrangement depicted as a block diagram in **Figure 9****.**

The UE 120 may comprise **a processing module 901**, such as a means for performing the methods described herein. The means may be embodied in the form of one or more hardware modules and/or one or more software modules

The UE 120 may further comprise **a memory 902.** The memory may comprise, such as contain or store, instructions, e.g. in the form of **a computer program 903**, which may comprise computer readable code units.

According to some embodiments herein, the UE 120 and/or the processing module 901 comprises **a processing circuit 904** as an exemplifying hardware module. Accordingly, the processing module 901 may be embodied in the form of, or 'realized by', the processing circuit 904. The instructions may be executable by the processing circuit 904, whereby the UE 120 is operative to perform the actions of Figure 8. As another example, the instructions, when executed by the UE 120 and/or the processing circuit 904, may cause the UE 120 to perform the actions according to Figure 8.

In view of the above, in one example, there is provided a UE 120 for performing a method for handling data packets from a Core Network (CN) node to a UE. Again, the memory 702 may contain the instructions executable by said processing circuit 904 whereby the UE 120 is operative for:
- receiving, from a RAN node 110, a RAN packet comprised in a RAN flow, wherein the RAN packet comprises a data packet and a RAN flow ID for identifying the RAN packet,
- determining a PDU session ID and a PDU flow ID of the data packet comprised in the RAN packet based on the received RAN flow ID.

Figure 9 further illustrates **a carrier 905**, or program carrier, which comprises the computer program 903 as described directly above.

In some embodiments, the processing module 901 comprises **an Input/Output (I/O) unit 906**, which may be exemplified by a receiving module and/or a sending module as described below when applicable.

In further embodiments, the UE 120 and/or the processing module 901 may comprise one or more of **a receiving module 910, a determining module 920, a decoding module 930, an extracting module 940, and a deriving module 950** as exemplifying hardware modules. In other examples, one or more of the aforementioned exemplifying hardware modules may be implemented as one or more software modules.

Therefore, according to the various embodiments described above, the UE 120 and/or the processing module 901 and/or the I/O Unit 906 and/or the receiving module 910 may be configured for receiving, from the RAN node 110, a RAN packet comprised in a RAN flow, wherein the RAN packet comprises a data packet and a RAN flow ID for identifying the RAN packet.

The UE 120 and/or the processing module 901 and/or the determining module 920 may be configured for determining a PDU session ID and a PDU flow ID of the data packet comprised in the RAN packet based on the received RAN flow ID.

The UE 120 and/or the processing module 901 and/or the determining module 920 and/or the extracting module 940 may be configured for determining the PDU session ID and the PDU flow ID by extracting the PDU session ID and the PDU flow ID from the RAN flow ID.

The UE 120 and/or the processing module 901 and/or the determining module 920 and/or the decoding module 930 may be configured for determining decoding the PDU session ID and the PDU flow ID by decoding the PDU session ID and the PDU flow ID from the RAN flow ID by means of a paring function. The paring function may be a Cantor paring function.

The UE 120 and/or the processing module 901 and/or the determining module 920 and/or the deriving module 950 may be configured for determining the PDU session ID and the PDU flow ID by deriving the PDU session ID and the PDU flow ID corresponding to a local RAN flow ID from a look-up table comprising a mapping of the local RAN flow IDs to combinations of PDU session ID and PDU flow ID.

The UE 120 and/or the processing module 901 and/or the I/O Unit 906 and/or the receiving module 910 may further be configured for receiving the look-up table comprising the mapping from the RAN node 110.

The UE 120 and/or the processing module 901 and/or the determining module 920 may be configured for, when the RAN flow comprises a plurality of RAN packets having the same RAN flow ID and a RAN flow ID is only comprised in a first packet of the RAN flow, determining the PDU session ID and a PDU flow ID based on the RAN flow ID in the first RAN packet and applying the determined PDU session ID and a PDU flow ID to the following RAN packets of the plurality of RAN packets in the RAN flow.

The UE 120 and/or the processing module 901 and/or the determining module 920 may be configured to use information about the mapping to perform reflective QoS function for a related radio bearer.

The RAN packet comprising the data packet and the generated RAN flow ID may be managed by a radio protocol layer. This means that the UE 120 has a peer layer as that in the RAN node 110, to take care of the flow ID management.

In some embodiments, the UE 120 is configured to apply a mapping rule to map packets in the uplink direction to a flow and a Data Radio Bearer towards the core network.

A reflective QoS function may be enabled, whereby the UE 120 is configured to detect a mapping rule via reflective QoS for mapping packets in uplink direction to a flow and a Data Radio Bearer towards the core network.

The UE 120 and/or the processing module 901 and/or the receiving module 910 may be configured to receive, via control signalling, RRC, from the RAN node 110, a mapping rule for mapping packets in uplink direction to a flow and a Data Radio Bearer towards the core network.

Although the exemplary embodiments of the method and the arrangements described in fig. 6 to 9 relate to Down Link (DL) communication, the embodiments herein may be equally applicable in the UpLink (UL).

During UL communication, e.g. when the UE 120 transmits data packages to the RAN node 110, the UE 120 may generate a RAN flow ID based on the PDU session ID and the PDU flow ID for the data package that is to be transmitted. Such an action performed by the UE may correspond to the Action 602 as performed by the RAN node 110 in the DL. Furthermore, the UE 120 may transmit the a RAN packet to the RAN node 110, wherein the RAN packet comprises the data packet and the generated RAN flow ID for identifying the RAN packet. The action of transmitting the RAN packet may correspond to the Action 603 as performed by the RAN node 110 in DL. Correspondingly, the UE 120 may comprise the arrangements required for performing the actions corresponding to the Actions 602 and 603 as described for the RAN node 110 in figure 7.

Correspondingly, the RAN node 110 may during UL communication perform actions corresponding to the Actions 801 and 802 as performed by the UE 120 in DL. The RAN node 110 may further comprise the arrangements required for performing the actions corresponding to the Actions 802 and 802 as described for the UE 120 in figure 9. In the Uplink the RAN node 110 may, after determining the PDU session ID and the PDU flow ID in correspondence with Action 802 described above, further perform an action of transmitting, to the CN node 130, a data packet in a PDU flow corresponding to the PDU flow ID, wherein the data packet comprises the PDU session ID and the PDU flow ID for identifying the data packet.

Those skilled in the art will also appreciate that the receiving module 710, the generating module 720, the encoding module 730, the transmitting module 740, the merging module 750, the receiving module 910, the determining module 920, the decoding module 930, the extracting module 940, and the deriving module 950 described above may refer to a combination of analog and digital circuits, and/or one or more processors configured with software and/or firmware, e.g. stored in the memory 702, 902 that when executed by the one or more processors such as the processing module 701, 901 as described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

When using the word "comprise" or "comprising" it shall be interpreted as non-limiting, i.e. meaning "consist at least of".

When using the word "set" herein, it shall be interpreted as meaning "one or more".

The embodiments herein are not limited to the above described preferred embodiments. Various alternatives and modifications may be used. Therefore, the above embodiments should not be taken as limiting the scope of the invention, which is defined by the appending claims.

## Claims

1. A method, performed by a Radio Access Network, RAN, node (110), for handling data packets from a Core Network, CN, node (131, 132) to a User Equipment, UE, (120), the method comprising:
- *receiving* (601) from the CN node (131,132), a data packet comprised in a Protocol Data Unit, PDU, flow, which packet comprises a PDU session ID and a PDU flow ID for identifying the packet,
- *generating* (602) a RAN flow ID based on the PDU session ID and the PDU flow ID,
- *transmitting* (603) a RAN packet to the UE (120), wherein the RAN packet comprises the data packet and the generated RAN flow ID for identifying the RAN packet,
wherein the generated RAN flow ID is managed by a radio protocol layer, and wherein the *generating* (602) a RAN flow ID comprises:
- encoding the PDU session ID and the PDU flow ID into the RAN flow ID by means of a paring function, wherein the generated RAN flow ID comprises less bits than the PDU session ID and the PDU flow ID combined, or
- deriving a local RAN flow ID for a combination of PDU session ID and PDU flow ID from a look-up table comprising a mapping of the local RAN flow IDs to combinations of PDU session ID and PDU flow ID, wherein the local RAN flow ID is only valid between the RAN node (110) and the UE (120).

2. The method according to claim 1, wherein the *generating* (602) a RAN flow ID comprises merging the PDU session ID and the PDU flow ID to create the RAN flow ID, wherein the PDU session ID is placed on the most significant bits and the PDU flow ID is placed on the least significant bits.

3. The method according to claim 2, wherein the merging comprises concatenating the PDU session ID and the PDU flow ID.

4. A method, performed by a User Equipment, UE, (120) for handling data packets from a Core Network, CN, node (131, 132) to the UE (120), the method comprising
- *receiving* (801), from a RAN node (110), a RAN packet comprised in a RAN flow, wherein the RAN packet comprises a data packet and a RAN flow ID for identifying the RAN packet,
- *determining* (802) a Protocol Data Unit, PDU, session ID and a PDU flow ID of the data packet comprised in the RAN packet based on the received RAN flow ID,
wherein the generated RAN flow ID is managed by a radio protocol layer, and
wherein the *determining* (802) PDU session ID and a PDU flow ID comprises:
- decoding the PDU session ID and the PDU flow ID from the RAN flow ID by means of a paring function, or
- deriving the PDU session ID and the PDU flow ID corresponding to a local RAN flow ID from a look-up table comprising a mapping of the local RAN flow IDs to combinations of PDU session ID and PDU flow ID.

5. The method according to claim 4, wherein the *determining* (802) PDU session ID and a PDU flow ID comprises extracting the PDU session ID and the PDU flow ID from the RAN flow ID, wherein the PDU session ID is placed on the most significant bits and the PDU flow ID is placed on the least significant bits of the RAN flow ID.

6. The method according to claim 4, wherein the paring function is a Cantor paring function.

7. The method according to claim 4, wherein the *determining* (802) PDU session ID and a PDU flow ID further comprises receiving the look-up table comprising the mapping from the RAN node (110).

8. The method according to any of the claims 4-7, wherein, when the RAN flow comprises a plurality of RAN packets having the same RAN flow ID and a RAN flow ID is only comprised in a first packet of the RAN flow, the *determining* (802) PDU session ID and a PDU flow ID comprises:
- determining the PDU session ID and a PDU flow ID based on the RAN flow ID in the first RAN packet and applying the determined PDU session ID and a PDU flow ID to the following RAN packets of the plurality of RAN packets in the RAN flow.

9. The method according to any of claims 4-8, wherein the UE (120) applies a mapping rule to map packets in the uplink direction to a flow and a Data Radio Bearer towards the core network according to the mapping rule.

10. The method according to any of claims 4-9, wherein a reflective QoS function is enabled, whereby the UE (120) detects a mapping rule via reflective QoS for mapping packets in uplink direction to a flow and a Data Radio Bearer towards the core network.

11. A Radio Access Network, RAN, node (110), for handling data packets from a Core Network, CN, node (131, 132) to a User Equipment, UE, (120), the RAN node (110) being configured to:
- *receive* from the CN node (131, 132), a data packet comprised in a PDU flow, which packet comprises a PDU session ID and a PDU flow ID for identifying the packet,
- *generate* a RAN flow ID based on the PDU session ID and the PDU flow ID,
- *transmit* a RAN packet to the UE (120), wherein the RAN packet comprises the data packet and the generated RAN flow ID for identifying the RAN packet
wherein the generated RAN flow ID is managed by a radio protocol layer, and the RAN node further being configured to *generate* a RAN flow ID by:
- encoding the PDU session ID and the PDU flow ID into the RAN flow ID by means of a paring function, wherein the generated RAN flow ID is adapted to comprise less bits than the PDU session ID and the PDU flow ID combined, or
- deriving a local RAN flow ID for a combination of PDU session ID and PDU flow ID from a look-up table comprising a mapping of the local RAN flow IDs to combinations of PDU session ID and PDU flow ID, wherein the local RAN flow ID is only valid between the RAN node (110) and the UE (120).

12. The RAN node (110) according to claim 11, further being configured to *generate* a RAN flow ID by merging the PDU session ID and the PDU flow ID to create the RAN flow ID, wherein the PDU session ID is placed on the most significant bits and the PDU flow ID is placed on the least significant bits.

13. The RAN node (110) according to claim 12, wherein the merging is adapted to comprise concatenating the PDU session ID and the PDU flow ID.

14. A User Equipment, UE, (120) for handling data packets from a Core Network, CN, node (131, 132) to the UE (120), the UE (120) being configured to:
- *receive* from a RAN node (110), a RAN packet comprised in a RAN flow, wherein the RAN packet comprises a data packet and a RAN flow ID for identifying the RAN packet, and
- *determine* a PDU session ID and a PDU flow ID of the data packet comprised in the RAN packet based on the received RAN flow ID,
wherein the generated RAN flow ID is managed by a radio protocol layer, and the UE further being configured to *determine* a PDU session ID and a PDU flow ID by:
- decoding the PDU session ID and the PDU flow ID from the RAN flow ID by means of a paring function, or
- deriving the PDU session ID and the PDU flow ID corresponding to a local RAN flow ID from a look-up table comprising a mapping of the local RAN flow IDs to combinations of PDU session ID and PDU flow ID.

15. The UE (120) according to claim 14, further being configured to *determine* a PDU session ID and a PDU flow ID by extracting the PDU session ID and the PDU flow ID from the RAN flow ID, wherein the PDU session ID is placed on the most significant bits and the PDU flow ID is placed on the least significant bits of the RAN flow ID.

16. The UE (120) according to claim 14, wherein the paring function is adapted to be a Cantor paring function.

17. The UE (120) according to claim 14, further being configured to receive the look-up table comprising the mapping from the RAN node (110).

18. The UE (120) according to any of the previous claims 14-17, wherein, when the RAN flow is adapted to comprise a plurality of RAN packets having the same RAN flow ID, and wherein the RAN flow ID only is adapted to be comprised in a first packet of the RAN flow, and wherein the the UE (120) further is configured to *determine* the PDU session ID and the PDU flow ID by:
- determining the PDU session ID and a PDU flow ID based on the RAN flow ID in the first RAN packet and applying the determined PDU session ID and a PDU flow ID to the following RAN packets of the plurality of RAN packets in the RAN flow.

19. The UE (120) according to any of the previous claims 14-18, wherein the UE (120) is configured to apply a mapping rule to map packets in the uplink direction to a flow and a Data Radio Bearer towards the core network.

20. The UE (120) according to any of the previous claims 14-19, wherein a reflective QoS function is enabled, whereby the UE (120) is configured to detect a mapping rule via reflective QoS for mapping packets in uplink direction to a flow and a Data Radio Bearer towards the core network.

21. The UE (120) according to any of the previous claims 14-20, configured to receive, via control signaling, RRC, from the RAN node (110), a mapping rule for mapping packets in uplink direction to a flow and a Data Radio Bearer towards the core network.

## Patentansprüche

1. Verfahren, das von einem Knoten (110) eines Funkzugangsnetzwerks, RAN, durchgeführt wird, zur Handhabung von Datenpaketen von einem Knoten (131, 132) eines Kernnetzwerks, CN, an eine Benutzereinrichtung, UE, (120), wobei das Verfahren umfasst:
- Empfangen (601) vom CN-Knoten (131, 132) eines Datenpakets, das in einem Fluss von Protokolldateneinheiten, PDU, umfasst ist, wobei das Paket eine PDU-Sitzungs-ID und eine PDU-Fluss-ID zum Identifizieren des Pakets umfasst,
- Erzeugen (602) einer RAN-Fluss-ID basierend auf der PDU-Sitzungs-ID und der PDU-Fluss-ID,
- Senden (603) eines RAN-Pakets an die UE (120), wobei das RAN-Paket das Datenpaket und die erzeugte RAN-Fluss-ID zum Identifizieren des RAN-Pakets umfasst,
wobei die erzeugte RAN-Fluss-ID von einer Funkprotokollschicht verwaltet wird, und wobei das Erzeugen (602) einer RAN-Fluss-ID umfasst:
- Codieren der PDU-Sitzungs-ID und der PDU-Fluss-ID in die RAN-Fluss-ID durch eine Paarungsfunktion, wobei die erzeugte RAN-Fluss-ID weniger Bits als die PDU-Sitzungs-ID und die PDU-Fluss-ID zusammen umfasst, oder
- Ableiten einer lokalen RAN-Fluss-ID für eine PDU-Sitzungs-ID- und PDU-Fluss-ID-Kombination aus einer Nachschlagetabelle, die eine Zuordnung der lokalen RAN-Fluss-IDs zu PDU-Sitzungs-ID- und PDU-Fluss-ID-Kombinationen umfasst, wobei die lokale RAN-Fluss-ID nur zwischen dem RAN-Knoten (110) und der UE (120) gültig ist.

2. Verfahren nach Anspruch 1, wobei das Erzeugen (602) einer RAN-Fluss-ID ein Vereinigen der PDU-Sitzungs-ID und der PDU-Fluss-ID zum Erstellen der RAN-Fluss-ID umfasst, wobei die PDU-Sitzungs-ID auf den höchstwertigen Bits angeordnet wird, und die PDU-Fluss-ID auf den niedrigstwertigen Bits angeordnet wird.

3. Verfahren nach Anspruch 2, wobei das Vereinigen ein Verketten der PDU-Sitzungs-ID und der PDU-Fluss-ID umfasst.

4. Verfahren, das von einer Benutzereinrichtung, UE, (120) durchgeführt wird, zur Handhabung von Datenpaketen von einem Knoten (131, 132) eines Kernnetzwerks, CN, an die UE (120), wobei das Verfahren umfasst:
- Empfangen (801) von einem RAN-Knoten (110) eines RAN-Pakets, das in einem RAN-Fluss umfasst ist, wobei das RAN-Paket ein Datenpaket und eine RAN-Fluss-ID zum Identifizieren des RAN-Pakets umfasst,
- Bestimmen (802) einer Protokolldateneinheits, PDU,-Sitzungs-ID und einer PDU-Fluss-ID des im RAN-Paket umfassten Datenpakets basierend auf der empfangenen RAN-Fluss-ID,
wobei die erzeugte RAN-Fluss-ID von einer Funkprotokollschicht verwaltet wird, und wobei das Bestimmen (802) der PDU-Sitzungs-ID und einer PDU-Fluss-ID umfasst:
- Decodieren der PDU-Sitzungs-ID und der PDU-Fluss-ID aus der RAN-Fluss-ID durch eine Paarungsfunktion oder
- Ableiten der PDU-Sitzungs-ID und der PDU-Fluss-ID, die einer lokalen RAN-Fluss-ID entsprechen, aus einer Nachschlagetabelle, die eine Zuordnung der lokalen RAN-Fluss-IDs zu PDU-Sitzungs-ID- und PDU-Fluss-ID-Kombinationen umfasst.

5. Verfahren nach Anspruch 4, wobei das Bestimmen (802) der PDU-Sitzungs-ID und einer PDU-Fluss-ID ein Extrahieren der PDU-Sitzungs-ID und der PDU-Fluss-ID aus der RAN-Fluss-ID umfasst, wobei die PDU-Sitzungs-ID auf den höchstwertigen Bits angeordnet wird, und die PDU-Fluss-ID auf den niedrigstwertigen Bits angeordnet wird.

6. Verfahren nach Anspruch 4, wobei die Paarungsfunktion eine Cantorsche Paarungsfunktion ist.

7. Verfahren nach Anspruch 4, wobei das Bestimmen (802) der PDU-Sitzungs-ID und einer PDU-Fluss-ID ferner ein Empfangen der Nachschlagetabelle mit der Zuordnung vom RAN-Knoten (110) umfasst.

8. Verfahren nach einem der Ansprüche 4 bis 7, wobei der RAN-Fluss eine Mehrzahl von RAN-Paketen mit der gleichen RAN-Fluss-ID umfasst, und eine RAN-Fluss-ID nur in einem ersten Paket des RAN-Flusses umfasst ist, wobei das Bestimmen (802) der PDU-Sitzungs-ID und einer PDU-Fluss-ID umfasst:
- Bestimmen der PDU-Sitzungs-ID und einer PDU-Fluss-ID basierend auf der RAN-Fluss-ID im ersten RAN-Paket und Anwenden der bestimmten PDU-Sitzungs-ID und einer PDU-Fluss-ID auf die folgenden RAN-Pakete der Mehrzahl von RAN-Paketen im RAN-Fluss.

9. Verfahren nach einem der Ansprüche 4 bis 8, wobei die UE (120) eine Zuordnungsregel zum Zuordnen von Paketen in der Uplink-Richtung zu einem Fluss und einem Daten-Funkträger zum Kernnetzwerk gemäß der Zuordnungsregel anwendet.

10. Verfahren nach einem der Ansprüche 4 bis 9, wobei eine reflektive QoS-Funktion aktiviert wird, wobei die UE (120) eine Zuordnungsregel zum Zuordnen von Paketen in der Uplink-Richtung zu einem Fluss und einem Daten-Funkträger zum Kernnetzwerk mittels der reflektiven QoS erkennt.

11. Knoten (110) eines Funkzugangsnetzwerks, RAN, zum Handhaben von Datenpaketen von einem Knoten (131, 132) eines Kernnetzwerks, CN, an eine Benutzereinrichtung, UE, (120), wobei der RAN-Knoten (110) konfiguriert ist zum:
- Empfangen vom CN-Knoten (131, 132) eines Datenpakets, das in einem PDU-Fluss umfasst ist, wobei das Paket eine PDU-Sitzungs-ID und eine PDU-Fluss-ID zum Identifizieren des Pakets umfasst,
- Erzeugen einer RAN-Fluss-ID basierend auf der PDU-Sitzungs-ID und der PDU-Fluss-ID,
- Senden eines RAN-Pakets an die UE (120), wobei das RAN-Paket das Datenpaket und die erzeugte RAN-Fluss-ID zum Identifizieren des RAN-Pakets umfasst,
wobei die erzeugte RAN-Fluss-ID von einer Funkprotokollschicht verwaltet wird, und der RAN-Knoten ferner so konfiguriert ist, dass er die RAN-Fluss-ID erzeugt durch:
- Codieren der PDU-Sitzungs-ID und der PDU-Fluss-ID in die RAN-Fluss-ID durch eine Paarungsfunktion, wobei die erzeugte RAN-Fluss-ID so ausgelegt ist, dass sie weniger Bits als die PDU-Sitzungs-ID und die PDU-Fluss-ID zusammen umfasst, oder
- Ableiten einer lokalen RAN-Fluss-ID für eine PDU-Sitzungs-ID- und PDU-Fluss-ID-Kombination aus einer Nachschlagetabelle, die eine Zuordnung der lokalen RAN-Fluss-IDs zu PDU-Sitzungs-ID- und PDU-Fluss-ID-Kombinationen umfasst, wobei die lokale RAN-Fluss-ID nur zwischen dem RAN-Knoten (110) und der UE (120) gültig ist.

12. RAN-Knoten (110) nach Anspruch 11, der ferner so konfiguriert ist, dass er eine RAN-Fluss-ID durch Vereinigen der PDU-Sitzungs-ID und der PDU-Fluss-ID zum Erstellen der RAN-Fluss-ID erzeugt, wobei die PDU-Sitzungs-ID auf den höchstwertigen Bits angeordnet wird, und die PDU-Fluss-ID auf den niedrigstwertigen Bits angeordnet wird.

13. RAN-Knoten (110) nach Anspruch 12, wobei das Vereinigen so ausgelegt ist, dass es ein Verketten der PDU-Sitzungs-ID und der PDU-Fluss-ID umfasst.

14. Benutzereinrichtung, UE, (120) zum Handhaben von Datenpaketen von einem Knoten (131, 132) eines Kernnetzwerks, CN, an die UE (120), wobei die UE (120) konfiguriert ist zum:
- Empfangen von einem RAN-Knoten (110) eines RAN-Pakets, das in einem RAN-Fluss umfasst ist, wobei das RAN-Paket ein Datenpaket und eine RAN-Fluss-ID zum Identifizieren des RAN-Pakets umfasst, und
- Bestimmen einer PDU-Sitzungs-ID und einer PDU-Fluss-ID des im RAN-Paket umfassten Datenpakets basierend auf der empfangenen RAN-Fluss-ID,
wobei die erzeugte RAN-Fluss-ID von einer Funkprotokollschicht verwaltet wird, und die UE ferner so konfiguriert ist, dass sie eine PDU-Sitzungs-ID und eine PDU-ID bestimmt durch:
- Decodieren der PDU-Sitzungs-ID und der PDU-Fluss-ID aus der RAN-Fluss-ID durch eine Paarungsfunktion oder
- Ableiten der PDU-Sitzungs-ID und der PDU-Fluss-ID, die einer lokalen RAN-Fluss-ID entsprechen, aus einer Nachschlagetabelle, die eine Zuordnung der lokalen RAN-Fluss-IDs zu PDU-Sitzungs-ID- und PDU-Fluss-ID-Kombinationen umfasst.

15. UE (120) nach Anspruch 14, die ferner so konfiguriert ist, dass sie eine PDU-Sitzungs-ID und eine PDU-Fluss-ID durch Extrahieren der PDU-Sitzungs-ID und der PDU-Fluss-ID aus der RAN-Fluss-ID bestimmt, wobei die PDU-Sitzungs-ID auf den höchstwertigen Bits angeordnet wird, und die PDU-Fluss-ID auf den niedrigstwertigen Bits angeordnet wird.

16. UE (120) nach Anspruch 14, wobei die Paarungsfunktion so ausgelegt ist, dass sie eine Cantorsche Paarungsfunktion ist.

17. UE (120) nach Anspruch 14, die ferner so konfiguriert ist, dass sie die Nachschlagetabelle mit der Zuordnung vom RAN-Knoten (110) empfängt.

18. UE (120) einem der vorhergehenden Ansprüche 14 bis 17, wobei die UE (120) ferner so konfiguriert ist, dass sie, wenn der RAN-Fluss so ausgelegt ist, dass er eine Mehrzahl von RAN-Paketen mit der gleichen RAN-Fluss-ID umfasst, und die RAN-Fluss-ID so ausgelegt ist, dass sie nur in einem ersten Paket des RAN-Flusses umfasst ist, die PDU-Sitzungs-ID und die PDU-Fluss-ID bestimmt durch:
- Bestimmen der PDU-Sitzungs-ID und einer PDU-Fluss-ID basierend auf der RAN-Fluss-ID im ersten RAN-Paket und Anwenden der bestimmten PDU-Sitzungs-ID und einer PDU-Fluss-ID auf die folgenden RAN-Pakete der Mehrzahl von RAN-Paketen im RAN-Fluss.

19. UE (120) nach einem der vorhergehenden Ansprüche 14 bis 18, wobei die UE (120) so konfiguriert ist, dass sie eine Zuordnungsregel zum Zuordnen von Paketen in der Uplink-Richtung zu einem Fluss und einem Daten-Funkträger zum Kernnetzwerk anwendet.

20. UE (120) einem der der vorhergehenden Ansprüche 14 bis 19, wobei eine reflektive QoS-Funktion aktiviert ist, wobei die UE (120) so konfiguriert ist, dass sie eine Zuordnungsregel zum Zuordnen von Paketen in der Uplink-Richtung zu einem Fluss und einem Daten-Funkträger zum Kernnetzwerk mittels der reflektiven QoS erkennt.

21. UE (120) nach einem der Ansprüche 14 bis 20, die so konfiguriert ist, dass sie eine Zuordnungsregel zum Zuordnen von Paketen in Uplink-Richtung zu einem Fluss und einem Daten-Funkträger zum Kernnetzwerk mittels Steuersignalisierung, RRC, vom RAN-Knoten (110) empfängt.

## Revendications

1. Procédé, réalisé par un nœud de réseau d'accès radio, RAN, (110), destiné à gérer des paquets de données depuis un nœud de réseau central, CN, (131, 132) à un équipement d'utilisateur, UE, (120), le procédé comprenant :
- la réception (601), en provenance du nœud de CN (131, 132), d'un paquet de données compris dans un flux d'unités de données de protocole, PDU, le paquet comprenant un ID de session de PDU et un ID de flux de PDU pour l'identification du paquet,
- la génération (602) d'un ID de flux de RAN sur la base de l'ID de session de PDU et de l'ID de flux de PDU,
- la transmission (603) d'un paquet de RAN à destination de l'UE (120), dans lequel le paquet de RAN comprend le paquet de données et l'ID de flux de RAN généré pour l'identification du paquet de RAN,
dans lequel l'ID de flux de RAN généré est géré par une couche de protocole radio, et dans lequel la génération (602) d'un ID de flux de RAN comprend :
- le codage de l'ID de session de PDU et de l'ID de flux de PDU dans l'ID de flux de RAN au moyen d'une fonction d'appariement, dans lequel l'ID de flux de RAN généré comprend moins de bits que l'ID de session de PDU et l'ID de flux de PDU combinés, ou
- la déduction d'un ID de flux de RAN local pour une combinaison d'ID de session de PDU et d'ID de flux de PDA à partir d'une table de consultation comprenant une mise en concordance des ID de flux de RAN locaux avec des combinaisons d'ID de session de PDU et d'ID de flux de PDU, dans lequel l'ID de flux de RAN local n'est valide qu'entre le nœud de RAN (110) et l'UE (120).

2. Procédé selon la revendication 1, dans lequel la génération (602) d'un ID de flux de RAN comprend la fusion de l'ID de session de PDU et de l'ID de flux de PDU pour créer l'ID de flux de RAN, dans lequel l'ID de session de PDU est placé sur les bits de poids fort et l'ID de flux de PDU est placé sur les bits de poids faible.

3. Procédé selon la revendication 2, dans lequel la fusion comprend la concaténation de l'ID de session de PDU et de l'ID de flux de PDU.

4. Procédé, réalisé par un équipement d'utilisateur, UE, (120), destiné à gérer des paquets de données depuis un nœud de réseau central, CN, (131, 132) à un équipement d'utilisateur, UE, (120), le procédé comprenant :
- la réception (801), en provenance d'un nœud de RAN (110), d'un paquet de RAN compris dans un flux de RAN, dans lequel le paquet de RAN comprend un paquet de données et un ID de flux de RAN pour l'identification du paquet de RAN,
- la détermination (802) d'un ID de session d'unité de données de protocole, PDU, et d'un ID de flux de PDU du paquet de données compris dans le paquet de RAN sur la base de l'ID de flux de RAN reçu,
dans lequel l'ID de flux de RAN généré est géré par une couche de protocole radio, et dans lequel la détermination (802) d'un ID de session de PDU et d'un ID de flux de PDU comprend :
- le décodage de l'ID de session de PDU et de l'ID de flux de PDU à partir de l'ID de flux de RAN au moyen d'une fonction d'appariement, ou
- la déduction de l'ID de session de PDU et de l'ID de flux de PDU correspondant à un ID de flux de RAN local à partir d'une table de consultation comprenant une mise en concordance des ID de flux de RAN locaux avec des combinaisons d'ID de session de PDU et d'ID de flux de PDU.

5. Procédé selon la revendication 4, dans lequel la détermination (802) d'un ID de session de PDU et d'un ID de flux de PDU comprend l'extraction de l'ID de session de PDU et de l'ID de flux de PDU à partir de l'ID de flux de RAN, dans lequel l'ID de session de PDU est placé sur les bits de poids fort et l'ID de flux de PDU est placé sur les bits de poids faible de l'ID de flux de RAN.

6. Procédé selon la revendication 4, dans lequel la fonction d'appariement est une fonction d'appariement de Cantor.

7. Procédé selon la revendication 4, dans lequel la détermination (802) d'un ID de session de PDU et d'un ID de flux de PDU comprend en outre la réception de la table de consultation comprenant la mise en concordance en provenance du nœud de RAN (110).

8. Procédé selon l'une quelconque des revendications 4 à 7, dans lequel, lorsque le flux de RAN comprend une pluralité de paquets de RAN ayant le même ID de flux de RAN et un ID de flux de RAN n'est compris que dans un premier paquet du flux de RAN, la détermination (802) d'un ID de session de PDU et d'un ID de flux de PDU comprend :
- la détermination de l'ID de session de PDU et d'un ID de flux de PDU sur la base de l'ID de flux de RAN dans le premier paquet de RAN et l'application de l'ID de session de PDU déterminé et d'un ID de flux de PDU aux paquets de RAN suivants de la pluralité de paquets de RAN dans le flux de RAN.

9. Procédé selon l'une quelconque des revendications 4 à 8, dans lequel l'UE (120) applique une règle de mise en concordance pour mettre en concordance des paquets dans le sens de liaison montante avec un flux et un support radio de données vers le réseau central en fonction de la règle de mise en concordance.

10. Procédé selon l'une quelconque des revendications 4 à 9, dans lequel une fonction de QoS réflective est activée, de telle manière que l'UE (120) détecte une règle de mise en concordance par l'intermédiaire d'une QoS réflective pour la mise en concordance de paquets dans un sens de liaison montante avec un flux et un support radio de données vers le réseau central.

11. Nœud de réseau d'accès radio, RAN, (110), destiné à gérer des paquets de données depuis un nœud de réseau central, CN, (131, 132) à un équipement d'utilisateur, UE, (120), le nœud de RAN (110) étant configuré pour :
- la réception, en provenance du nœud de CN (131, 132), d'un paquet de données compris dans un flux de PDU, le paquet comprenant un ID de session de PDU et un ID de flux de PDU pour l'identification du paquet,
- la génération d'un ID de flux de RAN sur la base de l'ID de session de PDU et de l'ID de flux de PDU,
- la transmission d'un paquet de RAN à destination de l'UE (120), dans lequel le paquet de RAN comprend le paquet de données et l'ID de flux de RAN généré pour l'identification du paquet de RAN,
dans lequel l'ID de flux de RAN généré est géré par une couche de protocole radio, et le nœud de RAN est en outre configuré pour la génération d'un ID de flux de RAN par :
- le codage de l'ID de session de PDU et de l'ID de flux de PDU dans l'ID de flux de RAN au moyen d'une fonction d'appariement, dans lequel l'ID de flux de RAN généré est apte à comprendre moins de bits que l'ID de session de PDU et l'ID de flux de PDU combinés, ou
- la déduction d'un ID de flux de RAN local pour une combinaison d'ID de session de PDU et d'ID de flux de PDA à partir d'une table de consultation comprenant une mise en concordance des ID de flux de RAN locaux avec des combinaisons d'ID de session de PDU et d'ID de flux de PDU, dans lequel l'ID de flux de RAN local n'est valide qu'entre le nœud de RAN (110) et l'UE (120).

12. Nœud de RAN (110) selon la revendication 11, configuré en outre pour la génération d'un ID de flux de RAN par la fusion de l'ID de session de PDU et de l'ID de flux de PDU pour créer l'ID de flux de RAN, dans lequel l'ID de session de PDU est placé sur les bits de poids fort et l'ID de flux de PDU est placé sur les bits de poids faible.

13. Nœud de RAN (110) selon la revendication 12, dans lequel la fusion est apte à comprendre la concaténation de l'ID de session de PDU et de l'ID de flux de PDU.

14. Equipement d'utilisateur, UE, (120), destiné à gérer des paquets de données depuis un nœud de réseau central, CN, (131, 132) à un UE (120), l'UE (120) étant configuré pour :
- la réception, en provenance d'un nœud de RAN (110), d'un paquet de RAN compris dans un flux de RAN, dans lequel le paquet de RAN comprend un paquet de données et un ID de flux de RAN pour l'identification du paquet de RAN, et
- la détermination d'un ID de session de PDU et d'un ID de flux de PDU du paquet de données compris dans le paquet de RAN sur la base de l'ID de flux de RAN reçu,
dans lequel l'ID de flux de RAN généré est géré par une couche de protocole radio, et l'UE est en outre configuré pour la détermination d'un ID de session de PDU et d'un ID de flux de PDU par :
- le décodage de l'ID de session de PDU et de l'ID de flux de PDU à partir de l'ID de flux de RAN au moyen d'une fonction d'appariement, ou
- la déduction de l'ID de session de PDU et de l'ID de flux de PDU correspondant à un ID de flux de RAN local à partir d'une table de consultation comprenant une mise en concordance des ID de flux de RAN locaux avec des combinaisons d'ID de session de PDU et d'ID de flux de PDU.

15. UE (120) selon la revendication 14, configuré en outre pour la détermination d'un ID de session de PDU et d'un ID de flux de PDU par l'extraction de l'ID de session de PDU et de l'ID de flux de PDU à partir de l'ID de flux de RAN, dans lequel l'ID de session de PDU est placé sur les bits de poids fort et l'ID de flux de PDU est placé sur les bits de poids faible de l'ID de flux de RAN.

16. UE (120) selon la revendication 14, dans lequel la fonction d'appariement est apte à être une fonction d'appariement de Cantor.

17. UE (120) selon la revendication 14, configuré en outre pour la réception de la table de consultation comprenant la mise en concordance en provenance du nœud de RAN (110) .

18. UE (120) selon l'une quelconque des revendications 14 à 17, dans lequel, lorsque le flux de RAN est apte à comprendre une pluralité de paquets de RAN ayant le même ID de flux de RAN et l'ID de flux de RAN est apte à n'être compris que dans un premier paquet du flux de RAN, l'UE (120) est en outre configuré pour la détermination de l'ID de session de PDU et de l'ID de flux de PDU par :
- la détermination de l'ID de session de PDU et d'un ID de flux de PDU sur la base de l'ID de flux de RAN dans le premier paquet de RAN et l'application de l'ID de session de PDU déterminé et d'un ID de flux de PDU aux paquets de RAN suivants de la pluralité de paquets de RAN dans le flux de RAN.

19. UE (120) selon l'une quelconque des revendications 14 à 18, dans lequel l'UE (120) est configuré pour appliquer une règle de mise en concordance pour mettre en concordance des paquets dans le sens de liaison montante avec un flux et un support radio de données vers le réseau central.

20. UE (120) selon l'une quelconque des revendications 14 à 19, dans lequel une fonction de QoS réflective est activée, de telle manière que l'UE (120) soit configuré pour détecter une règle de mise en concordance par l'intermédiaire d'une QoS réflective pour la mise en concordance de paquets dans un sens de liaison montante avec un flux et un support radio de données vers le réseau central.

21. UE (120) selon l'une quelconque des revendications 14 à 20, configuré pour la réception, par l'intermédiaire d'une signalisation de commande, RRC, en provenance du nœud (110), d'une règle de mise en concordance pour la mise en concordance de paquets dans un sens de liaison montante avec un flux et un support radio de données vers le réseau central.
